# FASCICULE DE BREVET EUROPEEN

(11) **EP 0 517 672 B1**
(45) Date de publication et mention de la délivrance du brevet: **02.04.1997**
(21) Numéro de dépôt: 92830228.0
(22) Date de dépôt: 15.05.1992
(51) Int. Cl.: H02P 6/00

(54) **Perfectionnements sur une enrouleuse pour bobines en sellette**
Verbesserungen für eine Sattelspulen Wickelmaschine
Improvements for a saddle coil winding machine

(30) Priorité: 30.05.1991 IT FI910126
(43) Date de publication de la demande: 09.12.1992
(73) Titulaire: SPEMAC S.R.L., 50131 Firenze (IT)
(72) Inventeur: Brunetti, Andrea, I-50049 Sesto Fiorentino (Firenze) (IT)
(74) Mandataire: Martini, Lazzaro

(56) Documents cités:
- FR-A- 2 264 375
- GB-A- 2 134 671
- PATENT ABSTRACTS OF JAPAN, vol. 10, no. 228 (E-426) 8 août 1986; & JP-A-61 064 039
- EPE'89, 3rd EUROPEAN CONFERENCE ON POWER ELECTRONICS AND APPLICATIONS, 9 octobre 1989, Aachen DE, EPE'89-Secretariat, Düsseldorf DE, pp. 7-11: A. TIJERINA et al.: 'Comparison between different adaptive speed controls of permanent magnet synchronous motor drives'

## Description

La présente invention concerne des machines pour l'enroulement de bobines en sellette ou similaires communément utilisée dans des appareils récepteurs de télévision et moniteurs. En particulier, elle concerne des enrouleuses dans lesquelles le bras guide-fil, qui entraîne et positionne le fil sur un mandrin fixe de forme adaptée, se déplace avec un mouvement alternatif, le long d'un arc de cercle d'environ 300° autour du mandrin.

Dans ces machines connues, le mouvement du bras qui positionne le fil sur le mandrin fixe est obtenu à partir d'un moteur hydraulique alimenté par une grosse centrale qui maintient sous pression l'huile nécessaire au fonctionnement du moteur.
Ces machines connues sont caractérisées par le fait que les rampes d'augmentation de la vitesse au début de l'enroulement et de diminution de la vitesse à la fin du bobinage ne présentent pas une variation linéaire, mais sont en escalier et obtenues au moyens de systèmes compliqués d'électrovannes et de réducteurs de débit et de pression; que le moteur hydraulique ne peut pas être arrêté de manière répétée en un point précis en régulant le flux d'huile; que l'arrêt en position angulaire du bras autour du mandrin est obtenu mécaniquement au moyen d'un goujon qui, lorsqu'il est actionné par un piston hydraulique, pénètre dans un logement en bloquant la rotation du moteur hydraulique lui-même.

Ces caractéristiques entraînent différents inconvénients, les principaux étant: un réglage grossier des rampes de variation de la vitesse et l'impossibilité d'adaptation aux nécessités réelles du type de bobines réaliser; une usure des pièces d'entraînement entre le moteur hydraulique et le bras en raison des fortes contraintes imposées au système par le blocage mécanique brusque d'organes en mouvement; la dépendance des réglages par rapport à la température de l'huile qui doit être stabilisée au moyen d'un groupe de refroidissement à eau ou similaire.

Le but principal de la présente invention est d'éliminer ces inconvénients ainsi que d'autres.

On connaît aussi par le document DE-A-2.528.530 une enrouleuse de bobines en sellette avec un moteur électrique d'entraînement à courant continu, un réducteur de vitesse et un dispositif de commande électronique pour régler la vitesse et la direction de rotation du moteur pendant le processus d'enroulement d'une bobine.
Encore, on connaît par le document JP-A-61064039 une enrouleuse de bobines en sellette avec un moteur électrique d'entraînement constitué par un servomoteur, un dispositif de commande de puissance et des moyens électroniques de contrôle de la vitesse du moteur pendant le processus d'enroulement d'une bobine.
FR-A-2 264 375 divulgue une enrouleuse de bobines en sellette avec un bras guide-fil entraîné par un moteur électrique.

La présente invention procure une enrouleuse de bobines en sellette possédant les caractéristiques de la revendication 1. D'autres caractéristiques font l'objet des revendications 2 à 6.

Les avantages obtenus grâce à la présente invention consistent essentiellement dans le fait que la vitesse du moteur peut être réglée et contrôlée de manière instantanée en fonction des exigences de travail (caractéristiques du fil, dimensions de la bobine, nombre de spires, et autre); que les variations de vitesse au début et à la fin du cycle s'effectuent de manière linéaire et prédéterminée, en réduisant ainsi les risques de rupture ou d'endommagement du fil; que l'arrêt du moteur, au terme de chaque cycle de travail, a lieu la suite d'une commande électrique, et par conséquent sans contraintes mécaniques sur les organes de transmission du mouvement; que la position du dispositif d'alimentation du fil au début et à la fin de chaque cycle de travail est constamment fixée et n'est pas influencée par des actionnements hydrauliques; que la construction s'avère énormément simplifiée, ce qui entraîne une réduction considérable du poids, un entretien plus pratique et une plus grande fiabilité; que le niveau de bruit et la consommation d'énergie sont considérablement réduits. De plus l'invention évite que, en cas de mauvais fonctionnement, le bras ne puisse continuer sa course au-delà de l'angle imposé.

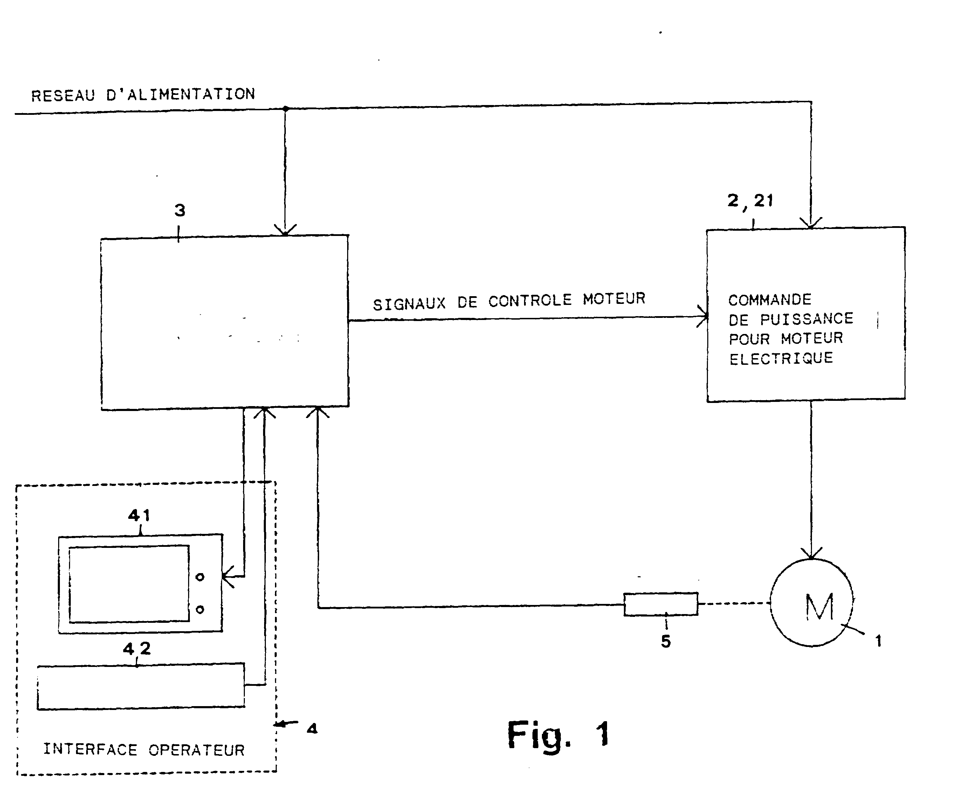

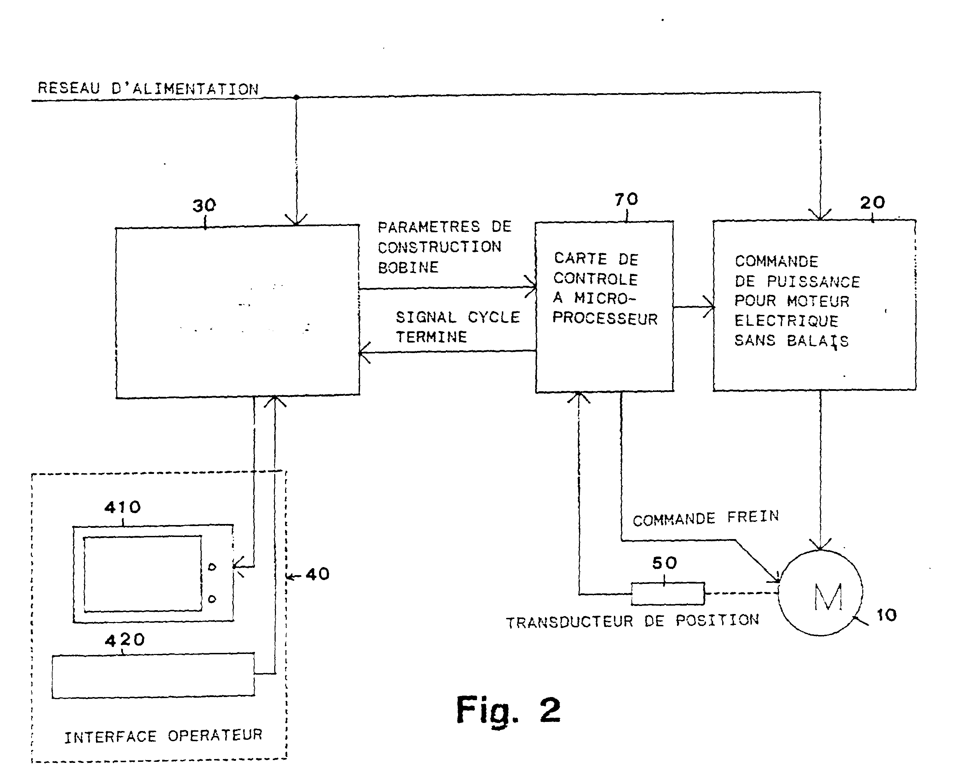

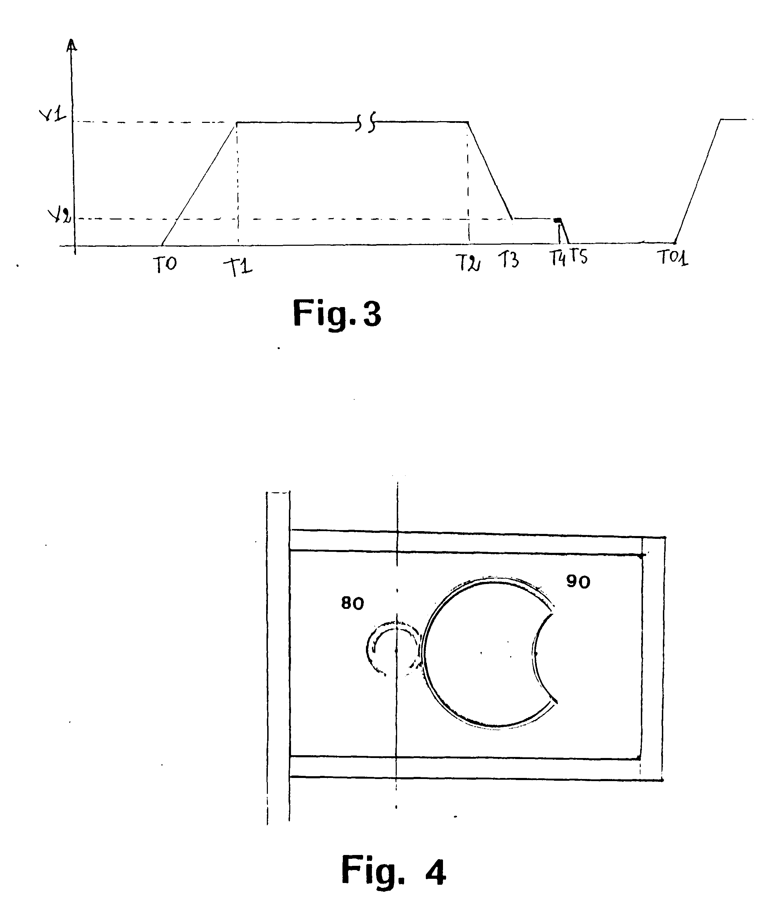

Ces avantages et caractéristiques de l'invention ainsi que d'autres seront plus et mieux compris de l'homme du métier à la lumière de la description qui va suivre et à l'aide des dessins annexés donnés à titre d'exemplification pratique de l'invention, mais à ne pas considérer dans un sens limitatif; dessins sur lesquels: la FIG. 1 représente un bloc-diagramme pour une enrouleuse de bobines en sellette avec un bras oscillant asservi à un moteur électrique du type triphasé, selon une première forme de réalisation de l'invention; la FIG. 2 représente un bloc-diagramme pour la même machine avec le bras oscillant asservi à un moteur électrique du type sans balais, selon une autre forme de réalisation; la FIG. 3 représente un diagramme de la vitesse du moteur durant un cycle de travail d'une machine conformément à l'invention; la FIG. 4 représente une vue détaillée du dispositif de transmission du mouvement au bras oscillant pour la machine de la Fig. 2.

Réduite à sa structure essentielle et en référence à la Fig. 1 des dessins annexés, une enrouleuse pour la formation de bobines en sellette avec bras oscillant selon les perfectionnements qui font l'objet de la présente invention, comprend:
- des moyens d'entraînement du bras oscillant avec un moteur électrique 1 du type triphasé, à quatre pôles, auto-freinant et un réducteur d'accouplement entre l'arbre du moteur et la boîte du bras oscillant avec un rapport de 1:6;
- des moyens de réglage de la vitesse dudit moteur électrique 1 avec un dispositif 2 de commande de puissance du moteur 1 comprenant un convertisseur de fréquence triphasé (onduleur) 21;
- des moyens de contrôle 3 de la vitesse du moteur électrique 1, appelés par la suite dans leur ensemble "controller", avec un microprocesseur, lesquels supervisent également le fonctionnement général de la machine;
- un dispositif 4 d'interface pour l'opérateur avec un moniteur 41 et un clavier 42;
- un capteur compte-spires 5.

Avantageusement, le dispositif 2 de commande de puissance est constitué par une carte intégrée, connue en soi, comprenant un convertisseur de fréquences triphasé (onduleur) 21 programmable directement ou par l'intermédiaire desdits moyens de contrôle 3.

En référence à la Fig. 3 est décrit ci-après le fonctionnement de la machine. Après avoir déterminé dans le controller 3, au moyen du clavier 42, les paramètres nécessaires pour la fabrication de la bobine, comme par exemple le nombre de spires, l'éventuelle mise en place de broches profilées, le temps de cuisson, de pressage et de refroidissement, et refermé la forme de support pour la bobine, le cycle de production commence (instant T0).
Ceci est pris en charge par le controller 3 qui transmet au frein moteur électrique le signal de freinage, à la suite duquel est alimenté l'enroulement de l'embrayage électrique du moteur 1 et qui transmet ensuite à l'onduleur 21 le signal de commande de démarrage du moteur 1, lequel est amené, avec une rampe d'accélération linaire, à la vitesse de régime V1 (phase T0-T1).
Pendant le bobinage, le controller 3 gère un éventuel actionnement des broches à commande pneumatique pour le profilage de la bobine.
Lorsqu'on s'approche du nombre total de spires initialement programmé (instant T2), par exemple à deux spires de la fin du bobinage détectées au moyen du capteur 5, le controller 3 transmet à l'onduleur 21 le signal de commande de décélération du moteur 1 jusqu'à la vitesse V2 proche de la valeur zéro (phase T2-T3).
Cette vitesse V2 est maintenue (phase T3-T4) jusqu'au moment où est détectée, toujours au moyen du capteur 5, une marque prédéterminée en correspondance de laquelle le controller 3 transmet le signal de commande d'arrêt à l'onduleur 21 qui arrête le moteur 1 avec un freinage électrique (phase T4-T5).
Enfin, avec le moteur arrêté, l'alimentation de l'embrayage électrique est coupée de manière à maintenir le moteur 1 bloqué dans la position obtenue (instant T5).

Avantageusement, les rampes linéaires d'accélération (T0-T1) et de décélération (T2-T3), la valeur de la vitesse V1 de régime et de la vitesse V2 obtenue à la suite de la décélération, l'intensité et la durée du freinage électrodynamique (T4-T5) sont programmables directement sur l'onduleur 21 ou bien par l'intermédiaire du controller 3.

De cette manière, la position du bras oscillant au repos est obtenue de manière constante et répétitive avec précision: cette position pouvant varier en fonction des exigences, et, par ailleurs, le frein du moteur 1 auto-freinant étant utilisé, non pas pour obtenir l'arrêt du moteur, mais uniquement pour maintenir cet état. L'usure de l'embrayage interne est ainsi pratiquement éliminée, avec comme conséquence une plus longue durée de fonctionnement du dispositif.
Une fois terminée la phase d'enroulement (T0-T5) , la bobine est soumise, de manière connue, aux opérations de pré-pressage, de cuisson, de pressage, de refroidissement, après quoi elle est déchargée pour permettre de commencer un nouveau cycle de bobinage (phase T5-T01).

En alternative et en référence à la Fig. 2 des dessins annexés, une machine pour le bobinage de bobines en sellette avec bras oscillant selon les perfectionnements faisant l'objet de la présente invention, comprend:
- des moyens d'entraînement du bras oscillant avec un moteur électrique 10 du type sans balais et avec un dispositif d'accouplement 80,90 entre le moteur électrique et le bras du type avec rapport de 1:3;
- des moyens de réglage de la vitesse dudit moteur électrique 10 avec un dispositif 20 de commande de puissance du moteur 10;
- des moyens de contrôle 30 ("controller") de la vitesse du moteur électrique 10 avec un microprocesseur, qui supervisent également le fonctionnement général de la machine, et une carte électronique 70 à microprocesseur d'interface entre le dispositif 20 et le controller 30;
- un dispositif 40 d'interface pour l'opérateur avec un moniteur 410 et un clavier 420;
- un transducteur 50 de la position du moteur.
Avantageusement, le dispositif 20 de commande de puissance est constitué par une carte électronique intégrée.

Le fonctionnement général est toujours géré par le controller 30, lequel transmet au circuit à microprocesseur 70 le signal de démarrage et les informations nécessaires à l'exécution du bobinage, telles que par exemple le nombre de spires, la vitesse d'enroulement, la pente des rampes d'accélération et de décélération, les éventuelles variations de vitesse en fonction du nombre de spires de manière à compenser les caractéristiques mécaniques du fil utilisé.

Avantageusement, ledit circuit 70 effectue le contrôle des rampes d'accélération et de décélération, du positionnement du bras et de son freinage final, ainsi que la transmission à la carte 20 des tensions de référence nécessaires pour provoquer le mouvement du bras oscillant.
Avantageusement, ledit mouvement s'effectue selon une loi de type pseudo-harmonique ou avec une quelconque autre courbe en fonction des exigences et il peut être modifié spire après spire.
La détection instantanée de la position du moteur est effectuée par l'intermédiaire du transducteur 50, lequel est solidaire mécaniquement avec l'arbre du moteur.
Le signal produit par ledit transducteur 50 est transmis au circuit 70 qui permet de signaler au controller 30 la fin de la phase d'enroulement (T0-T5) pour la mise en service des phases successives (T5-T01).
Les caractéristiques mécaniques du moteur "sans balais" permettent en outre de déterminer le mouvement de manière à pouvoir imprimer directement au bras guide-fil la loi de mouvement désirée sans nécessité d'une boîte de transformation.

Avantageusement, comme représenté sur la Fig. 4 des dessins annexés, le réducteur est composé d'un pignon 80 et d'une roue dentée 90 dont la denture est limitée à l'arc de cercle prédéterminé pour l'oscillation du bras autour du mandrin.
De cette manière, on évite que, en cas de mauvais fonctionnement, le bras ne puisse continuer sa course au-delà de l'angle imposé.

## Revendications

1. Enrouleuse de bobines en sellette comprenant un bras guide-fil oscillant autour d'un mandrin fixe et des moyens d' entraînement du bras oscillant, caractérisée en ce qu'elle comprend un moteur électrique (1,10) et un réducteur de vitesse (80,90) pour l'entraînement du bras oscillant, des moyens de réglage de la vitesse du moteur électrique (1,10) comportant un dispositif de commande de puissance (2,20), des moyens de contrôle (3,30) de la vitesse du moteur électrique (1,10) comportant un microprocesseur et un dispositif (4,40) d'interface avec un opérateur équipé d'un moniteur (41,410) et d'un clavier (42,420), ledit dispositif de commande de puissance (2,20) étant contrôlé par lesdits moyens de contrôle (3,30) de manière que, au début du processus d'enroulement d'une bobine, la vitesse du moteur électrique (1,10) qui entraîne le bras guide-fil oscillant augmente de façon linéaire de zéro jusqu'à une vitesse de régime (V1) prédéterminée pour l'enroulement du fil et que, après l'enroulement d'un nombre prédéterminé de spires, décelable au moyen d'un capteur ou transducteur (5,50), la vitesse du moteur électrique (1,10) décroisse de façon linéaire de ladite vitesse de régime (V1) à une valeur prédéterminée (V2) proche de zéro et soit ensuite, sous la commande dudit capteur ou transducteur, mise à zéro pour arrêter le moteur électrique (1,10) dans une position telle que le bras guide-fil oscillant se trouve, à la fin du processus d'enroulement, exactement dans la même position qu'au début du processus d'enroulement et **en ce que** ledit réducteur de vitesse (80,90) est composé d'un pignon (80) solidaire de l'arbre du moteur (10) et d'une roue dentée (90) solidaire de l'arbre du bras oscillant dont la denture est limitée à l'arc de cercle correspondant à l'oscillation du bras guide-fil.

2. Enrouleuse selon la revendication 1, caractérisée en ce que ledit moteur électrique (1) est du type triphasé à quatre pôles, auto-freinant.

3. Enrouleuse selon la revendication 1, caractérisée en ce que ledit moteur électrique (10) est du type "sans balais"

4. Enrouleuse selon la revendication 1, caractérisée en ce que ledit dispositif de commande de puissance (2,20) est une carte électronique intégrée.

5. Enrouleuse selon la revendication 4, caractérisée en ce que ladite carte électronique comporte un convertisseur de fréquences triphasé (21) programmable directement ou par l'intermédiaire des moyens de contrôle (3).

6. Enrouleuse selon la revendication 1, caractérisée en ce qu'elle comprend une carte électronique (70) à microprocesseur d'interface entre le dispositif de commande de puissance (20) et les moyens de contrôle (30) pour permettre la variation du mouvement du bras guide-fil spire par spire.

## Patentansprüche

1. Wickelmaschine für Sattelspulen, die einen Draht-Führungsarm umfaßt, der um einen festen Kern oszilliert, sowie Antriebseinrichtungen für den oszillierenden Arm, dadurch **gekennzeichnet,** daß sie folgende Bestandteile umfaßt:
Einen Elektromotor (1, 10) und ein Untersetzungsgetriebe (80, 90) zum Antreiben des oszillierenden Arms, Regeleinrichtungen für die Geschwindigkeit des Elektromotors (1, 10), die eine LeistungsSteuerung (2, 20) und Steuereinrichtungen (3, 30) für die Drehzahl des Elektromotors (1, 10) umfaßt, einen Mikroprozessor und eine für eine Bedienungsperson vorgesehene Schnittstelleneinrichtung (4, 40), die mit einem Monitor (41, 410) und einer Tastatur (42, 420) ausgestattet ist, wobei die LeistungsSteuerungseinrichtung (2, 20) von der Steuerungseinrichtung (3, 30) in der Weise gesteuert wird, daß zu Beginn des Wickelvorganges für eine Spule die Geschwindigkeit des Elektromotors (1, 10), der den oszillierenden Draht-Führungsarm antreibt, linear von Null bis zu einer vorbestimmten Betriebsgeschwindigkeit (V1) für das Aufwickeln des Drahtes ansteigt, und daß nach dem Aufwickeln einer vorbestimmten Anzahl von Wicklungen, die vermittels eines Aufnehmers oder Übertragers (5, 50) erfaßbar ist, die Geschwindigkeit des Elektromotors (1, 10) in linearer Weise von besagter Betriebsgeschwindigkeit (V1) auf einen vorbestimmten Wert (V2) in der Nähe von Null abnimmt und daß danach die Geschwindigkeit unter der Steuerung des Aufnehmers oder Übertragers auf Null gebracht wird, um den Elektromotor (1, 10) in einer Position derart anzuhalten, daß sich der oszillierende Draht-Führungsarm am Ende des Aufwickelvorganges genau in der gleichen Position befindet, die er am Anfang des Aufwickelvorganges eingenommen hat, und daß das Untersetzungsgetriebe (80, 90) aus einem Zahnrad (80) besteht, das fest mit der Welle des Motors (10) verbunden ist, sowie einem Zahnrad (90), das fest mit der Welle des oszillierenden Arms verbunden ist, dessen Zahnung auf den Kreisbogen begrenzt ist, der der Oszillationsbewegung des Draht-Führungsarms entspricht.

2. Wickelmaschine nach Anspruch 1, dadurch **gekennzeichnet,** daß der Elektromotor (1) ein sich selbst bremsender Dreiphasenmotor mit vier Polen ist.

3. Wickelmaschine nach Anspruch 1, dadurch **gekennzeichnet,** daß der Elektromotor (10) ein bürstenloser Motor ist.

4. Wickelmaschine nach Anspruch 1, dadurch **gekennzeichnet,** daß die Leistungs-Steuereinrichtung (2, 20) eine integrierte elektronische Platine ist.

5. Wickelmaschine nach Anspruch 4, dadurch **gekennzeichnet,** daß die elektronische Platine einen Drei-Phasen-Frequenzwandler (21) umfaßt, der direkt oder vermittels der Steuereinrichtungen (3) programmierbar ist.

6. Wickelmaschine nach Anspruch 1, dadurch **gekennzeichnet,** daß sie eine elektronische Platine (70) mit einem Schnittstellen-Mikroprozessor zwischen der Leistungs-Steuereinrichtung (20) und den Steuereinrichtungen (30) umfaßt, um eine Variation der Bewegung des Draht-Führungsarms Wicklung für Wicklung zu ermöglichen.

## Claims

1. Coiler for windings of the "saddle" type, comprising a wire guide oscillating around a fixed mandrel and comprising means for driving the oscillating arm, characterised by the fact that it comprises an electric motor (1,10) and a speed reducer (80,90) for driving the oscillating arm, means for regulating the speed of the electric motor (1,10), comprising a power control device (2,20), control means (3,30) for the speed of the electric motor (1,10), comprising a microprocessor and an interface device (4,40) with an operator, equipped with a monitor (41,310) and a keyboard (42,420), the said power control device (2,20) being operated by the said control means (3,30) in such a way that at the commencement of the operation of coiling a winding, the speed of the electric motor (1,10) which drives the oscillating wire guide arm undergoes a linear increase from zero up to a preselected working speed (V1) for the coiling of the wire and that after the coiling of a preselected number of turns, which can be ascertained from a pick-up or transducer (5,50), the speed of the electric motor undergoes a linear reduction from the said working speed (V1) to a preselected value close to zero and is then zeroed under the control of the said pick-up of the transducer, in order to bring the electric motor (1,10) to a stop in a new position which is such that the oscillating wire guide at the end of the coiling process occupies exactly the same position as at the beginning of the coiling process, the said speed reducer (80,90) consisting of a pinion (80) integral with the shaft of the motor (10) and a gear wheel (90) integral with the shaft of the oscillating arm, the teeth of the gear wheel heing limited to the circular arc corresponding to the oscillation of the wire guiding arm.

2. Coiler in accordance with Claim 1, characterised by the fact that the said electric motor (1) is of the self-braking three-phase four-pole type.

3. Coiler in accordance with Claim 1, characterised by the fact that the said electric motor (10) is of the brushless type.

4. Coiler in accordance with Claim 1, characterised by the fact that the said power control device (2,20) is an integrated electronic circuit board.

5. Coiler in accordance with Claim 4, characterised by the fact that the said electronic circuit comprises a three-phase frequency converter (21) programmable directly or via control means (3).

6. Coiler in accordance with Claim 1, characterised by the fact that it comprises an electronic circuit board (70) with an interface micro-processor between the power control device (20) and the control means (30) to enable the movement of the wire guiding arm to be varied from one turn to another.
